# DEMANDE DE BREVET EUROPEEN

(11) **EP 3 486 548 A1**
(43) Date de publication de la demande: **22.05.2019**
(21) Numéro de dépôt: 18206045.9
(22) Date de dépôt: 13.11.2018
(51) Int. Cl.: F17C 13/02, F16K 15/04, F16K 15/18, F16K 17/02

(54) **RÉCIPIENT DE FLUIDE SOUS PRESSION À JAUGE DE CONTRAINTE ET MOYENS DE COMMUNICATION À DISTANCE**

(30) Priorité: 21.11.2017 FR 1760965
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: LEFRANC, Marie, 78350 Jouy-en-Josas (FR); BONNETIER, Stéphane, 78350 Jouy-en-Josas (FR); CADALEN, Sébastien, 78350 Jouy-en-Josas (FR)
(74) Mandataire: Pittis, Olivier

(57) **Abrégé**

L'invention porte sur un Récipient de fluide sous pression (1), en particulier une bouteille de gaz, comprenant un corps cylindrique (2), un col (3) comportant un orifice de sortie (5) de fluide communiquant fluidiquement avec un volume intérieur (6) du récipient (1) servant à stocker un fluide sous pression, et une portion d'épaule (4) reliant le corps cylindrique (2) au col (3), et un dispositif de mesure (10) comprenant une jauge de contrainte (11) fixée à la paroi externe du récipient de gaz (1). Le dispositif de mesure (10) est fixé au col (3) ou à la portion d'épaule (4) du récipient (1). Le dispositif de mesure (10) comprend en outre des moyens de communication sans fil (12), comprenant notamment une antenne émettrice (16), qui sont configurés pour émettre sur un réseau de communication, tel les réseaux Lora, Sigfox ou Bluetooth. Utilisation d'un tel récipient de fluide (1) pour stocker ou distribuer un fluide sous pression, en particulier un ou plusieurs composés à l'état gazeux et/ou liquide, notamment un ou plusieurs composés gazeux présents dans l'air.

## Description

L'invention porte sur un récipient de fluide, en particulier de gaz sous pression, typiquement une bouteille de gaz sous pression à corps cylindrique, comprenant un dispositif de mesure à jauge de contrainte fixée à la paroi externe du récipient au niveau du col ou de l'épaule, et son utilisation pour stocker ou distribuer un fluide sous pression, en particulier un ou plusieurs composés à l'état gazeux ou liquide, notamment un ou plusieurs composés gazeux présents dans l'air.

Il est usuel de conditionner les gaz industriels et médicaux dans des récipients de fluide sous pression, typiquement des bouteilles de gaz, i.e., gaz purs ou mélanges gazeux. En général, le gaz y est comprimé et conservé à l'état gazeux et/ou liquéfié et à une pression supérieure à 50 bar abs, typiquement à une pression allant de 200 à 300 bar abs, voire plus.

Une bouteille de gaz servant au stockage de fluide sous pression (à l'état gazeux ou liquide) comprend typiquement un corps allongé avec une paroi périphérique de forme cylindrique comprenant une extrémité fermée appelée « base » ou « fond » destinée à reposer sur le sol lorsque le récipient est en position verticale et, à l'opposée, une extrémité ouverte comprenant un orifice de sortie de gaz en communication fluidique avec le volume interne de la bouteille de gaz. L'orifice de sortie de gaz est porté par une zone de diamètre resserrée appelée « col » de bouteille. Le col est séparé du corps allongé de forme cylindrique par une région intermédiaire appelée « épaule » ou « ogive » dont le diamètre décroit progressivement ; le plus grand diamètre étant situé du côté du corps cylindrique et le plus petit diamètre étant situé du côté du col.

Une bouteille de gaz peut être en matériau métallique, par exemple acier ou aluminium, ou en matériaux composites, tel que fibres, résine etc...

Par ailleurs, un récipient de stockage de gaz est généralement muni d'un bloc robinet, encore appelé vanne, de distribution de gaz permettant de fournir le gaz à un utilisateur, de préférence un bloc robinet avec système de détente intégré, encore appelé RDI ou robinet à détendeur intégré, permettant de réduire la pression du gaz à une pression plus basse compatible avec l'utilisation envisagée du gaz. Le bloc robinet est fixé au niveau de l'orifice de sortie du récipient porté par le col du récipient.

D'une façon générale, il est primordial de pouvoir connaître la quantité de fluide, typiquement de gaz, résiduel au sein d'une bouteille de gaz. Par exemple, dans le domaine médical, il est crucial de s'assurer que les patients ne soient pas en pénurie de gaz, par exemple d'oxygène, au cours de leur traitement.

Or, les systèmes de mesure actuels présentent des inconvénients.

Ainsi, certains ne sont pas précis et conduisent à des mesures erronées de la quantité de fluide, ou nécessitent l'intégration d'un capteur de pression ou analogue dans le robinet ou la vanne, ce qui complexifie l'architecture dudit robinet ou vanne, peut être source de fuites et n'est pas utilisable sur les bouteilles existantes sans engendrer un remplacement de leurs robinets ou vannes, ce qui n'est pas pratique et couteux.

D'autres sont facilement détériorés du fait de leur localisation sur les bouteilles de gaz, en particulier ceux venant se fixer au corps cylindrique des bouteilles de gaz qui sont sensibles aux chocs se produisant pendant l'utilisation des bouteilles (transport, manipulation...).

Enfin, beaucoup d'appareils de suivi ne permettent pas de suivre plusieurs bouteilles de gaz à distance et nécessite une lecture directe des valeurs mesurées par un opérateur, ce qui n'est pas pratique et source d'erreurs.

On connait par ailleurs :
- FR-A-3016424 qui enseigne une bouteille de gaz sous pression destinée à être agencée dans un avion. Elle comprend une jauge de déformation mesurant la déformation du récipient sous l'effet du gaz. Elle peut être agencée sur le fond, le corps cylindrique ou l'épaulement de la bouteille. Lorsqu'elle est agencée sur l'épaulement, il est nécessaire d'usiner la paroi interne de la bouteille pour en réduire l'épaisseur afin que la mesure puisse se faire.
- US-A-2013/0139897 enseigne un véhicule automobile comprenant un réservoir à hydrogène. Un dispositif de mesure, telle une jauge de contrainte, est agencé sur le corps cylindrique du réservoir pour en mesurer les déformations. Les mesures peuvent être envoyées via un transmetteur sans fil.

Partant de là, le problème qui se pose est de proposer un système amélioré permettant de connaître précisément la quantité de fluide résiduel, à l'état gazeux ou liquide, au sein d'une bouteille de gaz, qui ne soit pas sensible aux chocs ou analogues, qui puisse fournir des mesures à distance et qui puisse être utilisé sur n'importe quelle bouteille de gaz, y compris le parc de bouteilles de gaz existant.

La solution de l'invention repose alors sur un récipient de fluide, en particulier de gaz, comprenant un corps cylindrique (ou fût), un col comportant un orifice de sortie communiquant fluidiquement avec un volume intérieur du récipient servant à stocker un fluide sous pression, et une portion d'épaule reliant le corps cylindrique au col, et un dispositif de mesure comprenant une jauge de contrainte fixée à la paroi externe du récipient, caractérisé en ce que le dispositif de mesure est fixé au col ou à la portion d'épaule du récipient, ledit dispositif de mesure comprenant en outre des moyens de communication sans fil.

Avantageusement, le récipient de gaz comprend un capotage de protection agencé autour du robinet ou de la vanne de distribution de gaz et d'au moins une partie du col et/ou de la portion d'épaule du récipient de sorte que le dispositif de mesure soit situé à l'intérieur dudit capotage de protection de manière à ce que ledit capotage de protection protège le dispositif de mesure contre les chocs ou autres.

Selon le cas, le récipient de fluide sous pression, typiquement de gaz, selon l'invention peut comprendre l'une ou plusieurs des caractéristiques techniques suivantes :
- le capotage de protection est en polymère ou en métal, ou les deux.
- le dispositif de mesure est préférentiellement fixé à la portion d'épaule du récipient.
- la jauge de contrainte est conçue pour mesurer la déformation de la paroi du récipient induite par la pression du fluide, tel du gaz, contenu dans le volume intérieur dudit récipient.
- le dispositif de mesure de pression comprend en outre des moyens de traitement de signal reliés à la jauge de contrainte.
- le dispositif de mesure de pression comprend en outre des moyens d'alimentation électrique.
- les moyens d'alimentation électrique comprennent au moins une pile ou une batterie, rechargeable ou à usage unique, ou de tout autre dispositif de fourniture d'électricité.
- les moyens d'alimentation électrique sont reliés électriquement aux moyens de traitement de signal pour fournir du courant électrique auxdits moyens de traitement de signal, voire préférentiellement aussi à d'autres composants du dispositif de mesure reliés électriquement auxdits moyens de traitement de signal, par exemple la jauge de contrainte, les moyens de communication sans fil, les moyens de mesure de température....
- le dispositif de mesure de pression comprend en outre des moyens de mesure de température, de préférence un capteur de température.
- les moyens de mesure de température sont conçus et/ou agencés pour mesurer la température ambiante régnant dans l'atmosphère ambiante.
- de façon alternative, les moyens de mesure de température sont conçus et/ou agencés pour mesurer la température de la paroi du récipient de fluide, de préférence au niveau du col ou de la portion d'épaule.
- de façon alternative, les moyens de mesure de température sont conçus et/ou agencés pour mesurer la température de la paroi du récipient de fluide et la température ambiante.
- le récipient de gaz comprend un bloc robinet de distribution de fluide fixé au niveau de l'orifice de sortie de fluide porté par le col du récipient, en particulier un bloc robinet avec volant rotatif ou tout autre organe de manoeuvre équivalent conçu pour régler ou ajuster le débit de fluide délivré.
- de façon alternative, le récipient de gaz comprend une vanne de distribution de fluide fixé au niveau de l'orifice de fluide de gaz porté par le col du récipient, en particulier une vanne équipée d'un levier ou tout autre organe équivalent conçu pour commander une ouverture ou un arrêt, de type tout ou rien, de la fourniture de fluide, c'est-à-dire du débit de fluide.
- le récipient de gaz comprend préférentiellement un bloc robinet de distribution de gaz à système de détente intégré, encore appelé robinet à détendeur intégré ou RDI.
- les moyens de communication sans fil comprennent une antenne émettrice.
- les moyens de communication sans fil comprennent une antenne émettrice et sont configurés pour émettre sur un réseau de communication choisi parmi les réseaux Lora, Sigfox ou Bluetooth.
- le dispositif de mesure comprend un boitier à paroi(s) souple(s) ou rigide(s).
- le dispositif de mesure comprend un boitier comprenant une paroi conformée pour venir épouser la surface externe du récipient de fluide au niveau de la portion de col ou de la portion d'épaule du récipient de gaz, de préférence le boitier comprend une paroi arquée.
- le dispositif de mesure à jauge de contrainte est fixé au niveau du col ou de l'épaulement du récipient sans usinage mécanique préalable du récipient, en particulier sans qu'il ne soit nécessaire de réduire l'épaisseur de la paroi du récipient, au niveau du site de fixation du dispositif de mesure à jauge de contrainte.
- le récipient de gaz est une bouteille de gaz.
- le récipient de fluide est une bouteille de gaz ayant une contenance inférieure ou égale à environ 50 litres (équivalents en eau).
- le récipient de fluide est une bouteille de gaz contenant un ou plusieurs composés gazeux, c'est-à-dire un composé unique ou gaz pur, ou un mélange gazeux de plusieurs composés (i.e. mélanges binaires, ternaires, quaternaires etc...).
- le récipient de fluide contient un ou plusieurs composés gazeux à l'état gazeux et/ou à l'état liquéfié (liquide).
- le récipient de fluide contient un ou plusieurs composés présents dans ou constituant l'air atmosphérique, par exemple de l'oxygène, de l'azote, l'argon, du CO₂, du CO, du NO, du xénon, de l'hélium, du krypton, du méthane, de l'hydrogène ou autre.
- les moyens de communication sans fil sont reliés électriquement aux moyens de traitement de signal.
- les moyens de traitement de signal comprennent au moins un microprocesseur, de préférence au moins un microcontrôleur.
- les moyens de traitement de signal comprennent une carte électronique.
- les moyens de traitement de signal comprennent une carte électronique comprenant au moins un processeur, de préférence à microcontrôleur.
- les moyens de traitement de signal comprennent une carte électronique comprenant au moins un processeur mettant en oeuvre au moins un algorithme de traitement du signal.
- les moyens de traitement de signal comprennent une carte électronique comprenant des moyens de mémorisation.
- les moyens de traitement du signal comprennent un convertisseur analogique digital.
- les moyens de traitement du signal comprennent un amplificateur.
- les moyens de traitement du signal comprennent un pont de Wheatstone comprenant une ou plusieurs résistances variant très faiblement en température et de résistance nominale adaptée à la (les) jauge(s) utilisée(s). Alternativement, les résistances de précision du pont de Wheatstone peuvent être remplacées par des jauges inactives.
- les moyens de traitement de signal comprennent les moyens de mesure de température.
- les moyens de mesure de température sont agencés sur la carte électronique.
- les moyens de mesure de température sont directement intégrés sur la jauge.
- les moyens de mesure de température sont agencés de manière à être en contact direct avec la paroi externe du récipient.
- les moyens de mesure de température comprennent un capteur ou une sonde de mesure de température.
- les moyens de communication sans fil sont au moins en partie intégrés au microprocesseur, typiquement un microcontrôleur.
- des moyens de fixation permettent de solidariser le dispositif de mesure au col ou à la portion d'épaule du récipient, i.e. par collage. De préférence, les moyens de fixation comprennent une matière collante, telle une colle ou analogue. De préférence, on utilise une colle de type cyanoacrylate, méthacrylate, époxy, ou un mélange de plusieurs de ces colles, ou tout autre colle analogue à forte puissance de collage.
- le boitier incorpore tous les constituants du dispositif de mesure, en particulier jauge de contrainte, moyens de communication sans fil, moyens de traitement de signal, moyens d'alimentation électrique, moyens de mesure de température...
- la jauge de contrainte est solidarisée au boitier.
- la jauge de contrainte est agencée de manière à être en contact direct avec la surface externe du récipient, au niveau du col ou de la portion d'épaule.
- la jauge de contrainte est agencée au niveau de la paroi du boitier en contact avec la surface externe du récipient, en particulier une paroi conformée/arquée.
- la jauge de contrainte a une sensibilité allant jusqu'à 1 µm/m environ.
- la jauge de contrainte est conçue ou configurée pour mesurer des déformations jusqu'à 2000 µm/m.
- les moyens d'alimentation électrique sont reliés électriquement aux moyens de traitement de signal de manière à fournir du courant électrique auxdits moyens de traitement de signal, en particulier au microcontrôleur.
- les moyens d'alimentation électrique comprennent au moins une pile.
- les moyens d'alimentation électrique comprennent au moins une pile de type lithium dioxyde de manganese, ou lithium chlorure de thionyle.
- les moyens d'alimentation électrique comprennent au moins une pile ayant une autonomie de plusieurs années (i.e. au moins 2 ans), typiquement supérieure ou égale à 3 ans, c'est-à-dire qu'elle permet d'alimenter les composants consommant de l'électricité (jauge, microprocesseur...) pendant plusieurs années sans avoir à être changée ou rechargée pendant cette période.
- les moyens de mesure de température sont reliés électriquement aux moyens de traitement de signal de manière à fournir des mesures (signaux) de température auxdits moyens de traitement de signal.
- la jauge de contrainte, les moyens de communication sans fil et les moyens de mesure de température sont reliés électriquement aux moyens de traitement de signal et alimentés en courant électrique par lesdits moyens de traitement de signal, en particulier une carte électronique.

Par ailleurs, l'invention concerne aussi sur un dispositif de mesure comprenant une jauge de contrainte et des moyens de communication sans fil pour un récipient de fluide selon l'invention.

En particulier, le dispositif de mesure comprend un boitier incorporant la jauge de contrainte et les moyens de communication sans fil, ainsi que des moyens de traitement de signal, des moyens d'alimentation électrique et préférentiellement des moyens de mesure de température.

En outre, l'invention porte sur une utilisation d'un récipient de gaz selon l'invention pour stocker et/ou distribuer un gaz sous pression, à savoir un gaz pur (composé gazeux unique) ou un mélange de plusieurs composés gazeux, et éventuellement des impuretés gazeuses inévitables.

L'invention va maintenant être mieux comprise grâce à la description détaillée suivante, faite à titre illustratif mais non limitatif, en référence aux figures annexées parmi lesquelles :
- La Figure 1 représente un schéma d'un mode de réalisation d'un récipient de gaz selon la présente invention,
- La Figure 2 représente un schéma d'un mode de réalisation d'un dispositif de mesure à jauge de contrainte équipant le récipient de gaz de la Figure 1,
- La Figure 3a est une vue en 3D partielle d'une bouteille de gaz,
- La Figure 3b représente les effets des contraintes de pression s'appliquant sur la bouteille de la Figure 3a, et
- La Figure 4 représente les niveaux de déformations mesurés expérimentalement sur la bouteille en 4 positions différentes.

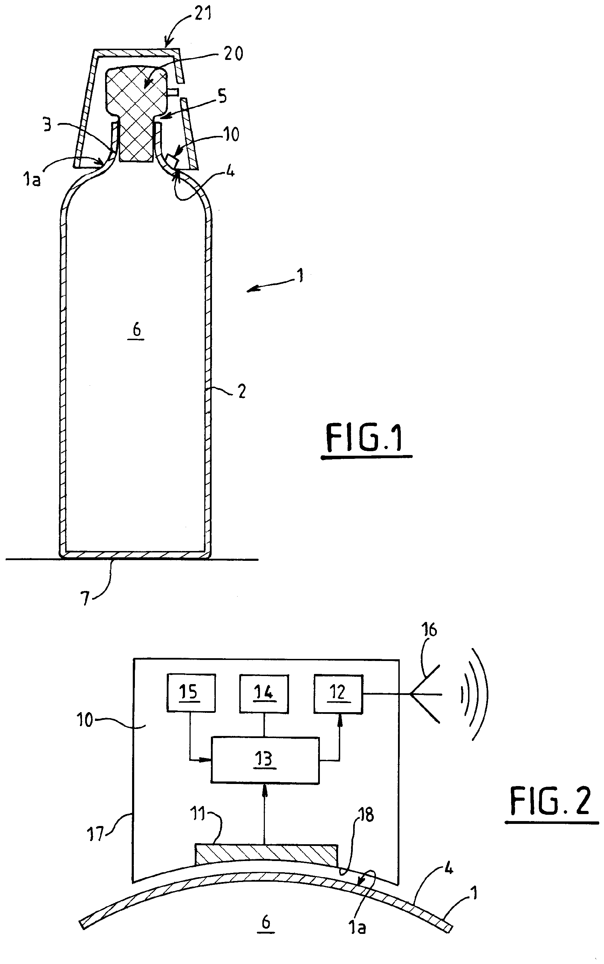

La Figure 1 représente un schéma d'un mode de réalisation d'un récipient de gaz 1, à savoir ici une bouteille de gaz 1 selon la présente invention comprenant un corps cylindrique 2, encore appelé « fût », un col 3 comportant un orifice de sortie de fluide 5 communiquant fluidiquement avec le volume intérieur 6 qui sert à stocker du gaz sous pression, qu'il soit sous forme gazeuse ou liquéfiée (i.e., liquide), et une portion d'épaule 4 reliant le fût cylindrique 2 au col 3.

La portion d'épaule 4, aussi appelée « ogive », est prise en sandwich entre le haut du fût 2 et le col 3. Le bas du fût cylindrique 2 est fermé par un fond 7.

Comme on le voit le diamètre (D1) du fût 2 est supérieur au diamètre (D2) du col (2), alors que la région d'épaulement 4 comprend des diamètres progressivement décroissants compris entre D1 et D2. La bouteille de gaz 1 est en métal, par exemple en acier, ou en matériaux composites, par exemple en fibres bobines enduites de résine ou autre. La contenance d'une telle bouteille 1 peut être comprise entre 0,5 L et 50 L environ (équiv. en eau), ou de contenance supérieure. Une telle architecture de bouteille de gaz 1 est classique.

La bouteille de gaz 1 sert à stocker un fluide sous forme liquide ou gazeuse, ou les deux. Le fluide, typiquement un gaz, peut y être stocké à une pression allant généralement jusqu'à 200 bar abs, voire supérieure. Le fluide peut être constitué d'un composé unique, par exemple un gaz pur, ou d'un mélange de plusieurs constituants, à savoir un mélange gazeux binaire, ternaire, quaternaire etc... De préférence, le fluide est constitué d'un ou plusieurs composés gazeux présents dans l'air ambiant, par exemple de l'oxygène, de l'azote, de l'argon, du CO, du CO₂, du NO, H₂ ou autre.

Cette bouteille de gaz 1 est équipée d'un bloc robinet 20, tel un RDI, ou d'une vanne venant se fixer, par exemple par vissage, au niveau de l'orifice de sortie 5 porté par le col 4.

Un capotage de protection 21, par exemple en métal ou en polymère, peut être agencé autour du robinet 20 ou de la vanne pour le protéger contre les chocs ou autres.

Le robinet ou la vanne 20 comprend des éléments habituels de ce type de dispositif, par exemple un ou plusieurs raccords de sortie, un ou plusieurs organes de manoeuvre servant à libérer ou, à l'inverse, stopper la distribution du gaz, par exemple un volant rotatif (réglage progressif du débit) ou un levier pivotant (libération du gaz de type tout ou rien), un raccord de remplissage servant à introduire du gaz frais dans le volume interne 6 de la bouteille 1 lorsqu'elle est vide... Une telle architecture de robinet 20 ou de vanne est également classique.

Selon la présente invention, un dispositif de mesure 10 comprenant une jauge de contrainte 11 est fixée à la paroi externe la de la bouteille 1 de gaz, au niveau de la portion de col 3 ou de la portion d'épaule 4 de la bouteille 1 de gaz, de préférence au niveau de la portion d'épaule 4.

Avantageusement, ce dispositif de mesure 10 est agencé sous le capotage de protection 21, c'est-à-dire de manière à être protégé des chocs par ledit capotage de protection 21, comme illustré en Figure 1.

Si des jauges de contrainte ont déjà été proposées pour mesurer la déformation d'un conteneur de fluide induite par la pression du fluide contenu dans ledit conteneur, comme rappelé par le document WO-A-02/066366, en pratique, celles-ci sont toujours installées sur des parties cylindriques des conteneurs, par exemple le fût cylindrique d'un récipient de gaz ou sur la paroi externe d'une canalisation tubulaire de gaz, ou alors la paroi du récipient doit être affinée par usinage, en général du côté intérieur du récipient, dans la région où la jauge doit être fixée. En effet, il existe une sorte de préjugé dans l'état de la technique, à savoir que les déformations seraient trop faibles pour être mesurées sur d'autres parties du conteneur, en particulier sur les cols ou les épaules des bouteilles de gaz, et/ou que les mesures obtenues seraient inexploitables pour en déduire une information de quantité résiduelle de fluide qui soit fiable.

Par ailleurs, la nécessité d'associer aux jauges de contrainte des conteneurs de fluide sous pression de l'art antérieur, un écran ou analogue pour permettre l'affichage des données destinées à un utilisateur et de l'encombrement lié à l'électronique d'acquisition et de son alimentation, exclut leur placement ailleurs que sur la partie cylindrique de ces conteneurs, en particulier le fût des bouteilles de gaz, pour des raisons évidentes non seulement d'encombrement mais aussi de facilité de lecture des informations affichées par l'écran ou analogue.

Or, les jauges de contrainte sont fragiles. Dès lors, si elles sont agencées sur la partie cylindrique des bouteilles de gaz qui est habituellement exposée aux chocs ou analogues (agressions climatiques etc..), elles peuvent être détériorées, notamment lors de la manipulation des bouteilles qui les portent. Il s'ensuit que les jauges de contrainte ne sont dès lors pas ou que très peu utilisées sur les bouteilles de gaz.

Dans le cadre de la présente invention, le fait d'agencer le dispositif de mesure 10 à jauge de contrainte 11 au niveau du col ou préférentiellement de l'épaulement 4 de la bouteille de gaz 1 et avantageusement sous le capotage 21 de protection permet non seulement de résoudre les problèmes liés aux chocs ou autres détériorations de la jauge mais aussi conduit à des résultats de mesure assez surprenants puisque les valeurs de déformation mesurées par la jauge 11 au niveau de l'épaulement 4 de la bouteille de gaz 1 sont suffisantes pour déterminer la quantité de gaz résiduelle dans la bouteille 1 qui en est équipée, comme il en résulte des essais consignés ci-après.

Ainsi, dans le cadre de la présente invention, des mesures des contraintes de traction et des déformations ont été opérées sur des bouteilles de gaz en alliage d'aluminium de type B2, c'est-à-dire de 2 litres de contenance en eau, disponibles dans le commerce.

Des calculs et des essais ont été faits pour prédire, d'une part, et mesurer expérimentalement, d'autre part, les niveaux de déformations de ladite bouteille sous pression.

Pour ce qui concerne la simulation, le prétraitement c'est-à-dire la génération de la géométrie et du maillage sont réalisés avec le logiciel Salomé™. Les calculs ont été réalisés en 2D axisymétrique avec le logiciel Castem™ (version 2016). Les équations de la mécanique des matériaux (faibles contraintes, petites déformations) sont résolues par une méthode éléments finis.

Un cas simple a été réalisé, il correspond, comme déjà mentionné, à une bouteille de 2 litres en aluminium en négligeant dans un premier temps la dilatation thermique du matériau. Le matériau est isotrope et homogène. Il est caractérisé par son module de Young et son coefficient de Poisson.

Une pression de 200 bar abs est appliquée sur la paroi intérieure et de 1 bar abs sur la paroi extérieure. Les valeurs des contraintes et déformation sur la paroi externe de la bouteille sont extraites afin de les comparer aux valeurs expérimentales.

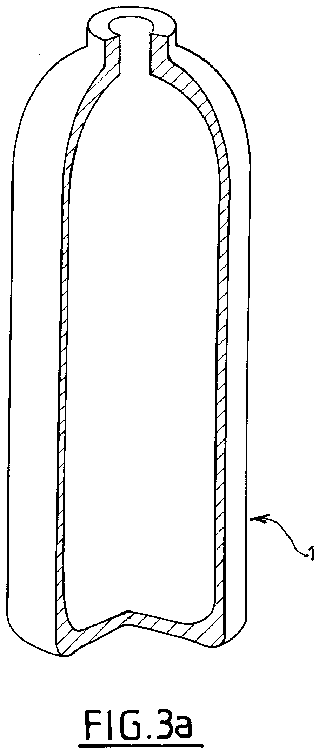

La Figure 3a est une représentation en coupe partielle et en 3 dimension de la bouteille 1 utilisée dans le cadre des essais qui montre le contour du domaine de calcul axisymétrique (en partie droite) lorsqu'elle n'est pas soumise à une pression interne.

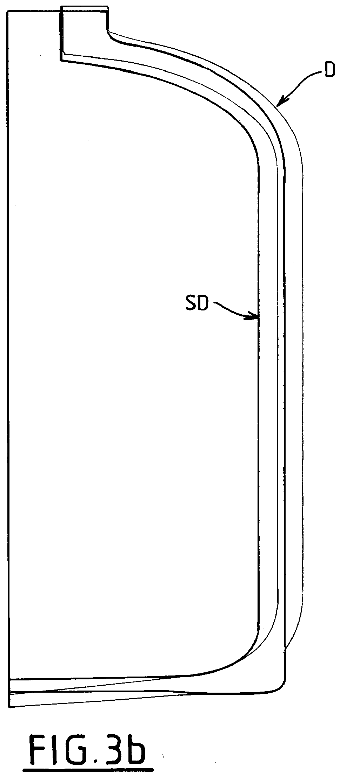

Par ailleurs, la Figure 3b illustre les géométries de la bouteille sans application de la pression interne, donc sans déformations (SD), comme sur la Fig. 3a, et avec application de pression (200 bar abs) conduisant à une déformation (D) de la paroi de la bouteille, y compris du col et de l'épaule. Afin de permettre une meilleure visualisation de la déformation (D), c'est-à-dire du niveau de contrainte, celle-ci a été schématisée, en Fig. 3b, amplifiée d'un coefficient multiplicateur de 1000.

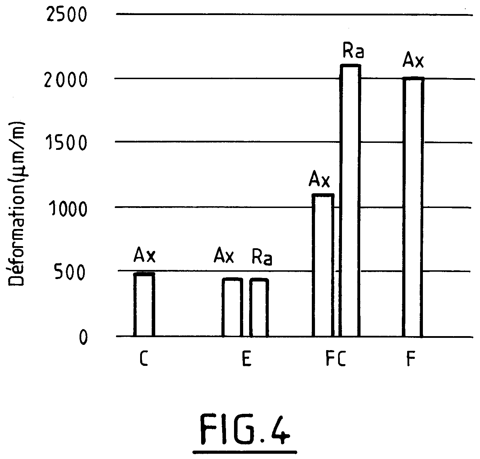

En outre, des essais ont été opérés en soumettant l'intérieur des bouteilles à une pression allant jusqu'à 200 bar abs, à température ambiante (entre 25°C et 30°C le jour des tests) et en mesurant les déformations (en mm/m) du récipient 1 au niveau du col (C sur Fig. 4) 3, de la région d'épaule 4 (E sur Fig. 4), du fond 7 (F sur Fig. 4) et du fût cylindrique 2 (FC sur Fig. 4), avec jauge de contrainte positionnée en orientation axiale (Ax) ou radiale (Ra).

Les jauges ont été collées sur la bouteille vide (i.e. avec une pression interne inférieure à 5 bar abs, typiquement de l'ordre de 1 bar abs), puis la bouteille a été remplie avec un gaz neutre. La nature du gaz n'a dans ces tests pas d'importance, à condition qu'il soit sous forme gazeuse dans l'intervalle de pressions allant jusqu'à 200 bar et pour des températures de l'ordre de 20 à 30°C.

La déformation a été mesurée par la jauge pour différentes pressions internes. Par déformation, on entend la variation des distances entre l'état vide et l'état considéré (cf. Fig. 3b).

La Figure 4 présente les déformations mesurées expérimentalement pour une pression interne de gaz de 200 bar et avec une jauge de contrainte présentant les caractéristiques donné dans le Tableau ci-après.

**Tableau**

| | |
|---|---|
| Type de capteur | Jauge de contrainte résistive |
| Réponse du capteur | Non linéaire |
| Facteur de jauge | Supérieur à 20 |
| Résistance nominale | Suffisante pour une consommation électrique inférieure à 1 µW |
| Plage de déformation | de 1 à 2000 µm/m |

Comme on le voit sur la Figure 4, si les déformations sont les plus importantes au niveau du fût cylindrique (FC) et du fond (F), on constate que des déformations mesurables et exploitables peuvent aussi être mesurées par la jauge de contrainte au niveau du col (C) et de la région d'épaule (E).

Ces mesures peuvent alors être exploitées pour déterminer la quantité de gaz résiduelle dans la bouteille de gaz 1. En effet, la pression interne de gaz se traduit en une contrainte exercée sur la paroi interne du récipient.

La relation pour un récipient donné entre la pression de gaz interne et la déformation induite au niveau de la paroi externe du récipient peut être trouvée de façon :
- soit théorique en appliquant les lois de mécanique classiques, par exemple loi de Hooke pour une déformation élastique.
- soit expérimentale par une phase de calibration. Classiquement, pour une déformation élastique, la déformation est proportionnelle à la contrainte, donc à la pression interne. Il suffit donc de connaître la déformation maximale et minimale correspondant aux pressions maximale et minimale de 1 et 200 bar abs.

La déformation de la paroi induit une variation de la résistance électrique de la jauge de contrainte.

La loi de réponse du capteur permettant de relier la résistance de la jauge en fonction de la déformation de cette dernière est propre au capteur. Il s'agit d'une réponse du type *R* = *f*(*g ε*) où : *ε* est la déformation (en m/m), g est un facteur de jauge préférentiellement supérieur à 20, et est une fonction non linéaire, préférentiellement une fonction exponentielle.

Finalement, cette résistance peut être mesurée par pont de Wheatstone ou par un pont diviseur de tension, la tension (U) de sortie étant fonction de la résistance de la jauge.

En d'autres termes, le principe de mesure de la pression interne de la bouteille peut être résumé comme suit :
a) une mesure d'une tension électrique (U) après un pont diviseur ou un pont de Wheastone permet d'estimer la résistance de la jauge (R).
b) une loi de réponse de la jauge permet de lier cette résistance (R) à la déformation (ε).
c) Les lois de la mécanique classique ou la calibration expérimentale permet de déduire de cette déformation (ε) la pression interne de gaz (P).

De là, en connaissant la pression interne et la température du gaz, on peut calculer une masse de gaz résiduelle, donc déterminer la quantité de gaz résiduelle dans la bouteille 1, c'est-à-dire l'autonomie en gaz de la bouteille 1.

On précise que la température du gaz peut être obtenue de façon directe pour des bouteilles métalliques par mesure de la température de la paroi du récipient, ou de façon indirecte par la mesure de la température ambiante et des variations de pression interne du gaz.

Selon un autre aspect important, le dispositif de mesure 10 de l'invention comprend aussi des moyens de communication sans fil 12 permettant de transmettre à distance les mesures opérées par la jauge de contrainte 11, ce qui permet de ne plus utiliser d'écran d'affichage, donc de gagner en encombrement et en facilité de gestion d'un parc de bouteilles de gaz, et aussi de réaliser des transmissions de données de façon automatique, ce qui évite en outre des erreurs de lecture et/ou de transmission que pourrait commettre un opérateur lisant des valeurs sur un afficheur.

Les moyens de communication sans fil 12 comprennent une antenne émettrice 16 émettant préférentiellement sur un réseau de type Sigfox, Lora, Bluetooth ou autre.

Les moyens de communication sans fil 12 permettent donc, en plus d'une gestion facilitée à distance des stocks de bouteilles de gaz, de déporter l'affichage de la quantité de gaz résiduelle dans la bouteille 1 et donc de diminuer l'encombrement générale du dispositif de mesure 10.

Le dispositif de mesure 10 équipant un récipient de fluide 1 selon la présente invention permet donc de répondre à des contraintes de robustesse, de mobilité et de facilité d'intégration et d'exploitation des données, grâce notamment à une mesure non intrusive de la pression par jauge de contrainte 11 sur le col ou l'épaulement (ogive) d'une bouteille de gaz 1 combinée à un système de communication à distance permettant d'envoyer les mesures à un serveur, un ordinateur ou autre d'un centre de surveillance ou autre.

Préférentiellement, on met en oeuvre une jauge de contrainte 11 à grande sensibilité, c'est-à-dire jusqu'à 1 µm/m environ, et de faible consommation, c'est-à-dire de l'ordre de quelques µW.

En effet, utiliser une jauge de contrainte à faible consommation permet d'utiliser une électronique compacte (moyens de traitement de données 13) et une petite pile (moyens d'alimentation électrique 14) apte à se loger dans un espace limité, ce qui réduit l'encombrement général du dispositif de mesure, et de grande autonomie, à savoir plusieurs années.

En résumé, le dispositif de mesure 10 est donc suffisamment petit pour être placé sur l'ogive de la bouteille 1, sous un capotage 21 éventuel où il est alors protégé des chocs liés à la manutention des bouteilles, suffisamment sensible pour mesurer la pression de façon non-intrusive et avec une consommation suffisamment faible pour fonctionner de façon autonome et connectée en dehors des centres de conditionnement. Enfin, l'ajout d'une sonde de température permet de compenser l'effet de la température sur la mesure et d'obtenir ainsi une valeur fiable du contenu de la bouteille, décorrélée de l'effet de dilatation du matériau avec la température et de la variation de pression avec la température.

D'une façon générale, selon l'invention, le dispositif de mesure 10 à jauge de contrainte 11 est agencé au niveau du col ou de l'épaulement 4 de la bouteille de gaz 1 sans qu'il ne soit nécessaire d'opérer un quelconque usinage mécanique préalable du récipient, en particulier sans qu'il ne soit nécessaire de réduire l'épaisseur de la paroi du récipient dans la région ou zone où le dispositif de mesure 10 est fixé, typiquement collé, comme proposé par exemple par FR-A-3016424. Ceci est particulièrement avantageux car usiner l'intérieur d'un récipient, telle une bouteille de gaz sous pression, est difficile et même impossible du fait de la zone de fragilité que cela engendre, laquelle est incompatible avec le stockage de gaz à haute pression, c'est-à-dire typiquement jusqu'à 200 ou 300 bars abs, voire plus.

Le récipient de fluide sous pression, telle une bouteille de gaz, selon l'invention peut être utilisé pour stocker tout fluide sous pression, c'est-à-dire conditionné à une pression élevée pouvant atteindre 200 à 300 bar abs, voire même des pressions supérieures, ledit fluide pouvant être à l'état gazeux, à l'état liquide ou liquéfié, ou les deux, notamment un gaz médical ou industriel.

## Revendications

1. Récipient de fluide sous pression (1), en particulier une bouteille de gaz, comprenant un corps cylindrique (2), un col (3) comportant un orifice de sortie (5) de fluide communiquant fluidiquement avec un volume intérieur (6) du récipient (1) servant à stocker un fluide sous pression, et une portion d'épaule (4) reliant le corps cylindrique (2) au col (3), et un dispositif de mesure (10) comprenant une jauge de contrainte (11) fixée à la paroi externe du récipient de gaz (1), **caractérisé en ce que** le dispositif de mesure (10) est fixé au col (3) ou à la portion d'épaule (4) du récipient (1), ledit dispositif de mesure (10) comprenant en outre des moyens de communication sans fil (12).

2. Récipient selon la revendication précédente, **caractérisé en ce que** le dispositif de mesure de pression (10) comprend en outre des moyens de traitement de signal (13) reliés à la jauge de contrainte (11).

3. Récipient selon l'une des revendications précédentes, **caractérisé en ce que** le dispositif de mesure de pression (10) comprend en outre des moyens d'alimentation électrique (14), de préférence les moyens d'alimentation électrique (14) comprennent au moins une pile ayant une autonomie d'au moins 2 ans.

4. Récipient selon l'une des revendications précédentes, **caractérisé en ce que** le dispositif de mesure de pression (10) comprend en outre des moyens de mesure de température (15).

5. Récipient selon l'une des revendications précédentes, **caractérisé en ce que** le récipient de gaz (1) comprend un bloc robinet ou une vanne de distribution de fluide (20) fixé au niveau de l'orifice de sortie (5) de gaz porté par le col (3) du récipient (1).

6. Récipient selon l'une des revendications précédentes, **caractérisé en ce que** le récipient de gaz (1) comprend un capotage de protection (1) agencé autour du bloc robinet ou de la vanne de distribution de fluide (20) et d'au moins une partie du col (3) et/ou de la portion d'épaule (4) du récipient (1) de sorte que le dispositif de mesure (10) soit situé à l'intérieur dudit capotage de protection (1).

7. Récipient selon l'une des revendications précédentes, **caractérisé en ce que** les moyens de communication sans fil (12) comprennent une antenne émettrice (16).

8. Récipient selon l'une des revendications précédentes, **caractérisé en ce que** les moyens de communication sans fil (12) comprennent une antenne émettrice (16) et sont configurés pour émettre sur un réseau de communication choisi parmi les réseaux Lora, Sigfox ou Bluetooth.

9. Récipient selon l'une des revendications précédentes, **caractérisé en ce que** le dispositif de mesure (10) comprend un boitier (17) comprenant une paroi (18) conformée pour venir épouser la surface externe (la) du récipient (1) au niveau de la portion de col (3) ou de la portion d'épaule (4) du récipient (1).

10. Récipient selon l'une des revendications précédentes, **caractérisé en ce que** le boitier (17) incorpore la jauge de contrainte (11), les moyens de communication sans fil (12), les moyens de traitement de signal (13), les moyens d'alimentation électrique (14) et les moyens de mesure de température (15).

11. Récipient selon l'une des revendications précédentes, **caractérisé en ce que** la jauge de contrainte (11) est agencée au niveau de la paroi (18) du boitier (17) en contact avec la surface externe (la) du récipient (1) de manière à être en contact direct avec la surface externe (la) du récipient, au niveau du col (3) ou de la portion d'épaule (4).

12. Récipient selon l'une des revendications précédentes, **caractérisé en ce que** les moyens d'alimentation électrique (14) sont reliés électriquement aux moyens de traitement de signal (13).

13. Récipient selon l'une des revendications précédentes, **caractérisé en ce que** les moyens de mesure de température (15) sont reliés électriquement aux moyens de traitement de signal (13).

14. Dispositif de mesure (10) comprenant une jauge de contrainte (11) et des moyens de communication sans fil (12) d'un récipient de fluide (1) selon l'une des revendications précédentes.

15. Utilisation d'un récipient de fluide (1) selon l'une des revendications 1 à 13 pour stocker ou distribuer un fluide sous pression, en particulier un ou plusieurs composés à l'état gazeux ou liquide, notamment un ou plusieurs composés gazeux présents dans l'air.
